# FASCICULE DE BREVET EUROPEEN

(11) **EP 0 687 372 B1**
(45) Date de publication et mention de la délivrance du brevet: **28.05.1997**
(21) Numéro de dépôt: 94908394.3
(22) Date de dépôt: 03.03.1994
(51) Int. Cl.: G06T 15/10

(54) **PROCEDE DE SIMULATION DE MOTIFS REPETITIFS SUR UNE IMAGE NUMERISEE**
VERFAHREN ZUR SIMULATION VON ZICH WIEDERHOLENDEN MUSTERN IN EINEM NUMERISCHEN BILD
PROCESS FOR THE SIMULATION OF REPETITIVE PATTERNS ON A DIGITAL IMAGE

(30) Priorité: 05.03.1993 FR 9302601
(43) Date de publication de la demande: 20.12.1995
(73) Titulaire: GUILLEMIN, Jean-Pierre, F-51100 Reims (FR)
(72) Inventeur: GUILLEMIN, Jean-Pierre, F-51100 Reims (FR)
(74) Mandataire: Sauvage, Renée
(86) Numéro de dépôt international: FR9400232
(87) Numéro de publication internationale: WO9420923

(56) Documents cités:
- EP-A- 0 315 051
- EP-A- 0 468 126
- FR-A- 2 590 708
- COMPUTER GRAPHICS FORUM. JOURNAL OF THE EUROPEAN ASSOCIATION FOR COMPUTER GRAPHICS vol. 8 , 1989 , UK pages 143 - 150 PLUMMER AND PENNA 'mass market applications for real-time 3d graphics'
- LE NOUVEL AUTOMATISME vol. 27, no. 30 , Mai 1982 , FRANCE pages 42 - 47 MARTINEZ ET AL. 'helios: terminal video-interactif par la synthèse d'images réalistes'

## Description

Procédé de simulation de motifs répétitifs sur une image numérisée, application à la réalisation d'un catalogue vidéo interactif et catalogue résultant.

La présente invention concerne, d'une manière générale, un procédé permettant de visualiser, sur un écran vidéo, le résultat de l'application simulée d'un décor sur au moins une région d'une image montrant, en deux dimensions, une scène qui, dans la réalité, est tridimensionnelle.

On connaît des procédés de conversion de représentations en plan en représentations en perspective qui permettent de visualiser, sur un écran, dans les trois dimensions de l'espace, un objet coté en deux dimensions et d'y appliquer des décors. Ces techniques sont utilisées dans les procédés de conception assistée par ordinateur (C.A.O.) sous le nom de "placage de structure", mais les dimensions réelles des motifs plaqués sont rarement respectées.

Une station graphique mettant en oeuvre un ensemble de fonctions complexes évite cet inconvénient, mais l'équipement correspondant n'est pas utilisable sans formation spécifique.

Dans la publication Computer Graphics Forum, Journal of the European Association for Computer Graphics, vol.8, 1989, North-Holland, pages 143-150, il est question d'offrir à des utilisateurs non spécialement qualifiés la possibilité de visualiser le résultat de l'installation de meubles ou de l'application de revêtements muraux ou de sols, sur l'image en perspective d'une zone d'une pièce d'habitation, mais, outre que la technique utilisée pour obtenir l'effet de perspective sur lesdits meubles n'est pas décrite, cet effet de perspective, comme il ressort de la Figure 7 de la publication en cause, est tout-à-fait médiocre. En outre, la publication est muette quant aux moyens qui devraient être mis en oeuvre pour respecter les proportions et l'effet de perspective lorsqu'il s'agit d'appliquer des décors à motifs répétitifs et il n'est pas davantage question des moyens qui devraient être mis en oeuvre pour rendre les effets d'ombre et de lumière.

De son côté, EP-A-0 468 126 concerne un système électronique de traitement de données qui a pour objectif de permettre la visualisation de carreaux de céramique sur une image en perspective d'un support. Pas plus que le précédent, ce document n'évoque les moyens à mettre en oeuvre pour respecter l'effet de perspective et les proportions de décors à motifs répétitifs et les effets de l'éclairement.

L'invention a pour but de réaliser une borne interactive donnant accès à un catalogue vidéo et permettant
non seulement à un client éventuel, à un décorateur ou à un vendeur-démonstrateur, n'ayant pas de connaissances particulières en informatique, d'essayer différents décors ou éléments de construction décoratifs à motifs répétitifs sur la représentation, par exemple, d'ensembles mobiliers en situation, eux-mêmes facilement sélectionnables,
mais encore d'aboutir à ce que ces décors à motifs répétitifs soient intégrés dans ladite représentation en respectant les effets de perspective, de proportions, d'ombres et d'illumination.

Ce but est atteint en ce sens que l'invention apporte un procédé de visualisation, sur un écran vidéo, du résultat de l'application simulée d'un décor sur au moins un plan monochrome de l'image numérisée, dite image support, d'un objet ou d'un ensemble d'objets tridimensionnels, dit support tridimensionnel, qui consiste :
a - à constituer une collection d'images numérisées de décors et à enregistrer lesdites images numérisées dans un fichier motifs,
b - à délimiter à l'écran, par un détourage polygonal, au moins une région de ladite image support, obtenant ainsi un masque,
c - à enregistrer, dans un fichier image support, l'image numérisée de ladite ou desdites images supports, et le ou lesdits masques,
d - à sélectionner un décor, dans le fichier motifs, et un masque dans le fichier image support, et
e - à visualiser l'application dudit décor sur ladite image support,
ledit procédé étant caractérisé en ce que, pour le rendre applicable à des décors offrant la répétition d'un motif déterminé, décors dits surfaces répétitives, tout en respectant l'effet de perspective et de proportions et les variations éventuelles d'éclairement, ledit procédé consiste en outre :
f - à délimiter, par un détourage rectangulaire, dans chacune desdites images numérisées de surfaces répétitives, un motif unitaire ; à mesurer in situ la longueur et la largeur réelles, dites dimensions motif de ce motif unitaire, et à affecter ces dimensions motif audit détourage rectangulaire,
g - à enregistrer, en outre, dans ledit fichier motifs :
ledit motif unitaire de chaque surface répétitive, et
lesdites dimensions motif,
h - à délimiter in situ, sur au moins un plan dudit support tridimensionnel, dit plan de référence, une zone rectangulaire dont on mesure la longueur et la largeur, dites dimensions plan,
i - à délimiter à l'écran, dans ce même plan de référence de l'image numérisée formant support, la projection de ladite zone rectangulaire,
j - à mettre en oeuvre l'étape b- en créant ledit masque dans au moins une région dudit plan de référence,
k - à enregistrer, en outre, dans ledit fichier image support :
la ou lesdites projections de zones rectangulaires, et
lesdites dimensions plan,
l - à calculer, d'une manière connue en soi, la luminance du pixel, ou groupe de pixels, de ladite région de l'image support numérisée que l'on considère éclairée normalement, dite luminance de référence, et celle des autres pixels, ou groupes de pixels, de cette région et à calculer les différences avec la luminance de référence,
grâce à quoi, après mise en oeuvre des étapes d- et e- précitées,
l'effet de perspective et de proportions est respecté par exploitation du rapport entre les dimensions motif et les dimensions plan, et
les variations éventuelles d'éclairement sont, de même, respectées par application, aux valeurs RGB des différents pixels ou groupes de pixels de la surface répétitive sélectionnée, d'une correction proportionnelle aux différences de luminance précédemment calculées.

Dans une forme d'exécution préférée, le procédé selon l'invention utilise, d'une part, comme collection de surfaces répétitives, une collection issue d'échantillons ou de photographies de substrats décoratifs choisis entre les carrelages de sol, les carrelages muraux, les papiers peints, les parquets, les dalles de sol, les moquettes à motifs, les claustras et autres produits similaires et, d'autre part, une collection d'images supports issues de photographies, ou de dessins ombrés, d'éléments mobiliers en situation, tels que cuisines, salles de bains, etc.

Pour la commodité de l'utilisateur, le catalogue de surfaces à appliquer sur les images supports pourra en outre comprendre des surfaces unies de couleur, illustrant par exemple un choix de peintures ou de revêtements de meubles.

Un catalogue interactif selon l'invention ayant, par exemple, en mémoire :
10 modèles de cuisines photographiées,
20 modèles de carrelage,
50 modèles de papiers peints,
30 modèles de carreaux de faïence,
20 couleurs de revêtements de meubles
100 teintes de peinture,
ce qui représente 230 enregistrements, autorise plus de 60 millions de combinaisons décoratives possibles.

Cette possibilité de choix est accessible aux non professionnels qui n'ont à opérer que de simples pointages sur l'écran à l'aide d'une souris ou, solution plus appropriée à un usage grand public, à l'aide d'un dispositif communément appelé "trackball" (sphère de commande incluse à demeure dans le dispositif et dont la surface est accessible, pour pouvoir la faire tourner dans une direction ou une autre, au travers d'une fenêtre prévue à cet effet. On peut également envisager d'avoir recours à un écran tactile.

Dans une variante de mise en oeuvre du procédé selon l'invention, le procédé utilise, comme image support, une photographie, ou un dessin ombré, d'un projet d'aménagement personnalisé. Dans ce cas, les opérations qui concernent le traitement préalable de l'image devront être effectuées spécialement, le fichier "motifs" étant lui utilisable tel quel. Dans le cas d'une image support de projet personnalisé, il faudra étalonner les masques pour enregistrer le niveau d'éclairement dit normal. On notera que la mise en oeuvre du procédé selon l'invention ne nécessite pas de connaître le plan coté en deux dimensions du projet d'aménagement, mais uniquement la longueur et la largeur d'un rectangle de référence de chaque plan dans lequel sera créé un ou plusieurs masques.

L'invention est décrite ci-après avec davantage de détail par référence aux dessins annexés dans lesquels :
- la figure 1 représente un papier peint ayant un motif répétitif de lignes brisées en chevrons, et
- la figure 2 représente un schéma en perspective de l'angle d'une pièce (pour ne pas surcharger la figure, les ombres n'ont pas été représentées, mais dans la suite on considérera qu'elles le sont).

La description ci-après indique le traitement d'une surface à motifs répétitifs particulière et d'une image support particulière, mais on comprendra que c'est en appliquant la même technique à toute la collection de surfaces à motifs répétitifs devant faire partie du catalogue et à toutes les images supports devant également y être présentées que l'on constituera le "fonds" du catalogue consultable à une borne interactive.

### Constitution du fichier motifs.

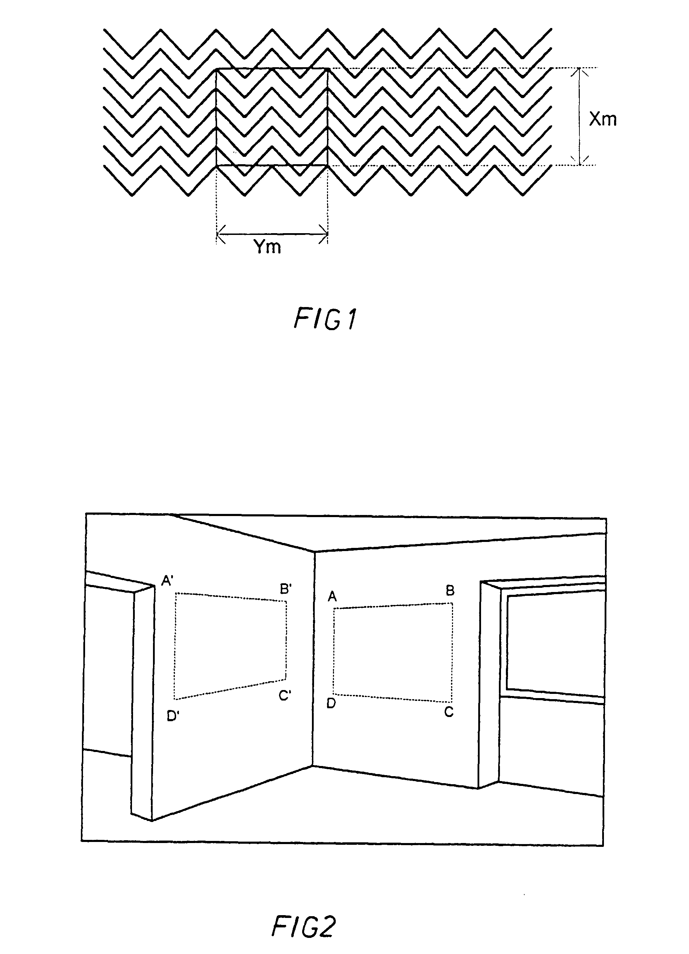

On commence par numériser l'image du papier peint de la figure 1, soit à partir d'un échantillon si le matériau lui-même est exploitable à cette fin et si le motif unitaire est inférieur ou égal au format de numérisation, soit à partir d'une photographie couleur, dans le cas contraire. Cette numérisation se fait par scannerisation ou toute autre technique appropriée.

On trace ensuite, à l'écran, à l'aide d'une souris ou tout autre moyen approprié, une zone rectangulaire délimitant très exactement un motif unitaire que l'on enregistre, et l'on enregistre également les dimensions réelles de ce motif unitaire, dimensions, dites "dimensions motif", que l'on affecte à la longueur Ym et à la largeur Xm de ce rectangle.

Cette opération est répétée sur chaque surface à motifs répétitifs que l'on désire faire entrer dans le catalogue et que, dans la suite et pour simplifier on appellera le "décor".

### Constitution du fichier images.

Comme précédemment, on commence par numériser l'image support.

Ensuite, on calcule la luminance de chaque pixel, ou groupe de pixels, de chaque zone de l'image susceptible de recevoir un décor, on calcule la différence entre les luminances mesurées et une luminance de référence qui correspond au pixel, ou groupe de pixels, de la zone où l'éclairement est considéré comme étant normal (ni fortement éclairé par le voisinage d'une fenêtre, ni dans l'ombre) et on enregistre ces différences.

On détoure, à l'écran, à l'aide de la souris, chacune desdites zones, et chaque zone détourée crée un masque polygonal de forme et de dimensions variées. Les coordonnées de chaque sommet du polygone sont repérées et permettent de définir la fraction d'image devant recevoir un même décor. Chacun des masques est ensuite empli d'une couleur monochrome (un gris de niveau spécifique parmi les 256 possibles), couleur dont la seule fonction est de servir de code d'identification du masque.

A l'aide de la souris, on délimite ensuite sur chaque plan dans lequel a été créé un ou plusieurs masques, une zone trapézoïdale, telles que A,B,C,D et A',B',C',D' à la figure 2, qui résulte de la projection sur le plan concerné d'un rectangle porté in situ sur le mur correspondant, rectangle dont on a relevé et enregistré les dimensions réelles (longueur et largeur), dites "dimensions plan". A partir de ces valeurs, toutes les autres dimensions du plan peuvent être calculées.

Lorsque l'on désire utiliser le catalogue interactif, on appelle à l'écran l'image de la figure 2 et l'on pointe, à l'aide de la souris, sur une zone de l'image que l'on veut revêtir d'un décor du catalogue. Si la région de l'image où se trouve le pixel pointé appartient à un masque, le masque correspondant apparaît. Dans le cas contraire, un message avertit l'utilisateur qu'il n'est pas prévu qu'un décor puisse être appliqué sur cette région de l'image.

L'utilisateur choisit ensuite le décor qu'il désire essayer dans une liste de références ou dans un affichage séquentiel apparaissant dans une fenêtre de sélection. Il entre son choix, et il s'ensuit que le décor vient couvrir le masque en respectant la perspective et les proportions, grâce à l'enregistrement des dimensions motif et des dimensions plan et en respectant l'éclairement grâce aux corrections appliquées aux couleurs RGB du décor à partir des différences de luminance précédemment enregistrées.

On notera que, lorsque l'opération est effectuée à partir d'un document "client" constitué de la photographie d'une pièce de son habitation, la technique utilisée tient compte automatiquement du type d'éclairage existant dans ladite pièce, puisque les variations de luminance qui en résulte sont enregistrées.

Lorsque l'utilisateur a arrêté au moins provisoirement son choix sur un décor, il le confirme et il peut passer à la sélection d'un autre masque et au choix d'un autre décor qu'il confirmera à son tour. Quand son choix global est devenu définitif, il peut l'éditer à l'aide d'une imprimante couleur.

Dans la description qui précède et dans les revendications, les dimensions plan sont mesurées et enregistrées à partir du tracé d'une zone rectangulaire. C'est là la solution la plus simple, mais il est bien entendu que l'on pourrait partir du tracé d'un autre polygone, l'important étant de mesurer des coordonnées de référence et d'affecter ces mesures aux coordonnées de la projection du tracé correspondant sur l'image support.

## Revendications

1. Procédé de visualisation, sur un écran vidéo, du résultat de l'application simulée d'un décor sur au moins un plan monochrome de l'image numérisée, dite image support, d'un objet ou d'un ensemble d'objets tridimensionnels, dit support tridimensionnel, qui consiste :
a - à constituer une collection d'images numérisées de décors et à enregistrer lesdites images numérisées dans un fichier motifs,
b - à délimiter à l'écran, par un détourage polygonal, au moins une région de ladite image support, obtenant ainsi un masque,
c - à enregistrer, dans un fichier image support, l'image numérisée de ladite ou desdites images supports, et le ou lesdits masques,
d - à sélectionner un décor, dans le fichier motifs, et un masque dans le fichier image support, et
e - à visualiser l'application dudit décor sur ladite image support,
caractérisé en ce que, pour rendre applicable ledit procédé à des décors offrant la répétition d'un motif déterminé, décors dits surfaces répétitives, tout en respectant l'effet de perspective et de proportions et les variations éventuelles d'éclairement, ledit procédé consiste en outre :
f - à délimiter, par un détourage rectangulaire (Ym,Xm), dans chacune desdites images numérisées de surfaces répétitives, un motif unitaire ; à mesurer in situ la longueur et la largeur réelles, dites dimensions motif de ce motif unitaire, et à affecter ces dimensions motif audit détourage rectangulaire,
g - à enregistrer, en outre, dans ledit fichier motifs :
ledit motif unitaire de chaque surface répétitive, et lesdites dimensions motif,
h - à délimiter in situ, sur au moins un plan dudit support tridimensionnel, dit plan de référence, une zone rectangulaire dont on mesure la longueur et la largeur, dites dimensions plan,
i - à délimiter à l'écran, dans ce même plan de référence de l'image numérisée formant support, la projection (A,B,C,D et A'B'C'D') de ladite zone rectangulaire,
j - à mettre en oeuvre l'étape b- en créant ledit masque dans au moins une région dudit plan de référence,
k - à enregistrer, en outre, dans ledit fichier image support :
la ou lesdites projections de zones rectangulaires, et lesdites dimensions plan,
l - à calculer, d'une manière connue en soi, la luminance du pixel, ou groupe de pixels, de ladite région de l'image support numérisée que l'on considère éclairée normalement, dite luminance de référence, et celle des autres pixels, ou groupes de pixels, de cette région et à calculer les différences avec la luminance de référence,
grâce à quoi, après mise en oeuvre des étapes d- et e-précitées,
l'effet de perspective et de proportions est respecté par exploitation du rapport entre les dimensions motif et les dimensions plan, et
les variations éventuelles d'éclairement sont, de même, respectées par application, aux valeurs RGB des différents pixels ou groupes de pixels de la surface répétitive sélectionnée, d'une correction proportionnelle aux différences de luminance précédemment calculées.

2. Procédé selon la revendication 1, caractérisé en ce qu'il utilise, comme collection de surfaces répétitives, une collection issue d'échantillons ou de photographies de substrats décoratifs choisis entre les carrelages de sol, les carrelages muraux, les papiers peints, les parquets, les dalles de sol, les moquettes à motifs, les claustras et autres produits similaires.

3. Procédé selon la revendication 1 ou 2, caractérisé en ce qu'il utilise une collection d'images supports issues de photographies, ou de dessins ombrés, d'éléments mobiliers en situation, tels que cuisines, salles de bains, etc.

4. Procédé selon l'une quelconque des revendications 1 à 3, caractérisé en ce qu'il utilise, en outre, une collection des surfaces unies de couleur.

5. Procédé selon l'une quelconque des revendications 1 à 3, caractérisé en ce qu'il utilise, comme image support, une photographie, ou un dessin ombré, d'un projet d'aménagement personnalisé.

6. Application du procédé selon l'une quelconque des revendications 1 à 4, à la réalisation d'un catalogue vidéo interactif.

7. Catalogue vidéo interactif issu de la mise en oeuvre du procédé selon l'une quelconque des revendications 1 à 4
pour la visualisation, sur un écran vidéo, du résultat de l'application simulée d'un décor sur au moins un plan monochrome de l'image numérisée, dite image support, d'un objet ou d'un ensemble d'objets tridimensionnels, dit support tridimensionnel, comprenant:
a - des moyens adaptés à constituer une collection d'images numérisées de décors et à enregistrer lesdites images numérisées dans un fichier motifs,
b - des moyens adaptés à délimiter à l'écran, par un détourage polygonal, au moins une région de ladite image support, obtenant ainsi un masque,
c - des moyens adaptés à enregistrer, dans un fichier image support, l'image numérisée de ladite ou desdites images supports, et le ou lesdits masques,
d - des moyens adaptés à sélectionner un décor, dans le fichier motifs, et un masque dans le fichier image support, et
e - des moyens adaptés à visualiser l'application dudit décor sur ladite image support,
caractérisé en ce que, pour rendre applicable ledit procédé à des décors offrant la répétition d'un motif déterminé, décors dits surfaces répétitives, tout en respectant l'effet de perspective et de proportions et les variations éventuelles d'éclairement, ledit catalogue vidéo interactif comprend en outre :
f - des moyens adaptés à délimiter, par un détourage rectangulaire (Ym,Xm), dans chacune desdites images numérisées de surfaces répétitives, un motif unitaire ; à mesurer in situ la longueur et la largeur réelles, dites dimensions motif de ce motif unitaire, et à affecter ces dimensions motif audit détourage rectangulaire,
g - des moyens adaptés à enregistrer, en outre, dans ledit fichier motifs :
ledit motif unitaire de chaque surface répétitive, et lesdites dimensions motif,
h - des moyens adaptés à délimiter in situ, sur au moins un plan dudit support tridimensionnel, dit plan de référence, une zone rectangulaire dont on mesure la longueur et la largeur, dites dimensions plan,
i - des moyens adaptés à délimiter à l'écran, dans ce même plan de référence de l'image numérisée formant support, la projection (A,B,C,D et A'B'C'D') de ladite zone rectangulaire,
j - des moyens adaptés à créer ledit masque dans au moins une région dudit plan de référence,
k - des moyens adaptés à enregistrer, en outre, dans ledit fichier image support :
la ou lesdites projections de zones rectangulaires, et lesdites dimensions plan,
l - des moyens adaptés à calculer, d'une manière connue en soi, la luminance du pixel, ou groupe de pixels, de ladite région de l'image support numérisée que l'on considère éclairée normalement, dite luminance de référence, et celle des autres pixels, ou groupes de pixels, de cette région et à calculer les différences avec la luminance de référence,
grâce à quoi
l'effet de perspective et de proportions est respecté par exploitation du rapport entre les dimensions motif et les dimensions plan, et
les variations éventuelles d'éclairement sont, de même, respectées par application, aux valeurs RGB des différents pixels ou groupes de pixels de la surface répétitive sélectionnée, d'une correction proportionnelle aux différences de luminance précédemment calculées.

## Patentansprüche

1. Verfahren zur Darstellung des Ergebnisses des simulierten Auftrags eines Dekors auf mindestens einer monochromen Fläche des digitalisierten Bilds, Trägerbild genannt, eines dreidimensionalen Objekts oder einer Gruppe von dreidimensionalen objekten, dreidimensionaler Träger genannt, auf einem Videoschirm, das darin besteht, daß
a) eine Sammlung von digitalisierten Bildern von Dekors angelegt wird und diese digitalisierten Bilder in einer Musterdatei gespeichert werden,
b) auf dem Bildschirm mindestens ein Bereich des Trägerbilds durch eine polygonale Umrahmung abgegrenzt wird, so daß man eine Maske erhält,
c) das digitalisierte Bild des oder der Trägerbilder und die Maske oder die Masken in einer Trägerbilddatei gespeichert werden,
d) in der Musterdatei ein Dekor und in der Trägerbilddatei eine Maske ausgewählt werden und
e) der Auftrag dieses Dekors auf diesem Trägerbild dargestellt wird,
dadurch gekennzeichnet, daß dieses Verfahren, um es auf Dekors, Wiederholungsflächen genannt, anwendbar zu machen, in denen sich ein bestimmtes Muster wiederholt, wobei gleichzeitig die Wirkung der Perspektive und der Proportionen und die ggf. bestehenden Beleuchtungsänderungen beibehalten werden, außerdem darin besteht, daß
f) in jedem der digitalisierten Bilder von Wiederholungsflächen durch eine rechteckige Umrahmung (Ym, Xm) ein Einzelmuster abgegrenzt wird, die reale Länge und die reale Breite, Musterabmessungen dieses Einzelmusters genannt, in situ gemessen werden und diese Musterabmessungen dieser rechteckigen Umrahmung zugeordnet werden;
g) in der Musterdatei außerdem folgendes gespeichert wird: das Einzelmuster jeder Wiederholungsfläche und die Musterabmessungen,
h) auf mindestens einer Fläche des dreidimensionalen Träger Bezugsfläche genannt, in situ eine rechteckige Zone abgegrenzt wird, deren Länge und Breite, Flächenabmessungen genannt, gemessen werden,
i) auf dem Bildschirm auf dieser Bezugsfläche des den Träger bildenden digitalisierten Bilds die Projektion (A,B,C,D und A'B'C'D') dieser rechteckigen Zone abgegrenzt wird,
j) der Schritt b) durchgeführt wird, indem diese Maske in mindestens einem Bereich dieser Bezugsfläche geschaffen wird,
k) in der Trägerbilddatei außerdem folgendes gespeichert wird:
die Projektion oder die Projektionen von rechteckigen Zonen und die Flächenabmessungen,
l) auf an sich bekannte Weise die Bezugsleuchtdichte genannte Leuchtdichte des Pixels oder der Pixelgruppe dieses Bereichs des digitalisierten Trägerbilds, das bzw. die als normal beleuchtet betrachtet wird, und die der anderen Pixel oder Pixelgruppen dieses Bereichs berechnet werden und die Differenzen zur Bezugsleuchtdichte berechnet werden, so daß nach Durchführung der Schritte d) und e)
die Wirkung der Perspektive und der Proportionen durch Auswertung des Verhältnisses zwischen den Musterabmessungen und den Flächenabmessungen beibehalten wird und
die ggf. bestehenden Beleuchtungsänderungen ebenfalls dadurch beibehalten werden, daß an den RGB-Werten der einzelnen Pixel oder Pixelgruppen der ausgewählten Wiederholungsfläche eine zu den berechneten Leuchtdichtedifferenzen proportionale Korrektur vorgenommen wird.

2. Verfahren nach Anspruch 1, dadurch gekennzeichnet, daß es als Sammlung von Wiederholungsflächen eine Sammlung verwendet, die aus Proben oder Fotografien von Dekorsubstraten hervorgeht, die ausgewählt sind aus Bodenfliesenbelägen, Wandfliesenbelägen, Tapeten, Parkettböden, Bodenplatten, gemusterte Auslegewaren, durchbrochenen Wandelementen und anderen ähnlichen Produkten.

3. Verfahren nach Anspruch 1 oder 2, dadurch gekennzeichnet, daß es eine Sammlung von Trägerbildern verwendet, die aus Fotografien oder schattierten Zeichnungen von installierten Möbelelementen wie Küchen, Badezimmern usw. hervorgegangen sind.

4. Verfahren nach einem der Ansprüche 1 bis 3, dadurch gekennzeichnet, daß es außerdem eine Sammlung von ungemusterten Farbflächen verwendet.

5. Verfahren nach einem der Ansprüche 1 bis 3, dadurch gekennzeichnet, daß es als Trägerbild eine Fotografie oder eine schattierte Zeichnung eines individuellen Einrichtungsprojekts verwendet.

6. Anwendung des Verfahrens nach einem der Ansprüche 1 bis 4 auf die Erstellung eines interaktiven Videokatalogs.

7. Unter Anwendung des Verfahrens nach einem der Ansprüche 1 bis 4 hergestellter interaktiver Videokatalog für die Darstellung des Ergebnisses des simulierten Auftrags eines Dekors auf mindestens einer monochromen Fläche des digitalisierten Bilds, Trägerbild genannt, eines dreidimensionalen Objekts oder einer Gruppe von dreidimensionalen Objekten, dreidimensionaler Träger genannt, auf einem Videoschirm, umfassend:
- a) Einrichtungen, die dafür ausgelegt sind, eine Sammlung von digitalisierten Bildern von Dekors anzulegen und diese digitalisierten Bilder in einer Musterdatei zu speichern,
b) Einrichtungen, die dafür ausgelegt sind, auf dem Bildschirm mindestens einen Bereich dieses Trägerbilds durch eine polygonale Umrahmung abzugrenzen, so daß man eine Maske erhält,
c) Einrichtungen, die dafür ausgelegt sind, das digitalisierte Bild des oder der Trägerbilder und die Maske oder die Masken in einer Trägerbilddatei zu speichern,
d) Einrichtungen, die dafür ausgelegt sind, in der Musterdatei ein Dekor und in der Trägerbilddatei eine Maske auszuwählen, und
e) Einrichtungen, die dafür ausgelegt sind, den Auftrag dieses Dekors auf diesem Trägerbild darzustellen,
dadurch gekennzeichnet, daß der Videokatalog, um dieses Verfahren auf Dekors anwendbar zu machen, in denen sich ein bestimmtes Muster wiederholt, und gleichzeitig die Wirkung der Perspektive und der Proportionen und die ggf. bestehenden Änderungen der Beleuchtung beizubehalten, außerdem folgendes umfaßt:
f) Einrichtungen, die dafür ausgelegt sind, in jedem dieser digitalisierten Bilder von Wiederholungsflächen durch eine rechteckige Umrahmung (Ym, Xm) ein Einzelmuster abzugrenzen, die reale Länge und die reale Breite, Musterabmessungen dieses Einzelmusters genannt, in situ zu messen und diese Musterabmessungen der rechteckigen Umrahmung zuzuordnen,
g) Einrichtungen, die dafür ausgelegt sind, in der Musterdatei außerdem folgendes zu speichern:
das Einzelmuster jeder Wiederholungsfläche und die Musterabmessungen,
h) Einrichtungen, die dafür ausgelegt sind, auf mindestens einer Fläche des dreidimensionalen Trägers, Bezugsfläche genannt, in situ eine rechteckige Zone abzugrenzen, deren Länge und Breite, Flächenabmessungen genannt, gemessen werden,
i) Einrichtungen, die dafür ausgelegt sind, auf dem Bildschirm auf dieser Bezugsfläche des den Träger bildenden digitalisierten Bilds die Projektion (A,B,C,D und A'B'C'D') dieser rechteckigen Zone abzugrenzen,
j) Einrichtungen, die dafür ausgelegt sind, diese Maske in mindestens einem Bereich dieser Bezugsfläche zu schaffen,
k) Einrichtungen, die dafür ausgelegt sind, in der Trägerbilddatei außerdem folgendes zu speichern:
die Projektion oder die Projektionen von rechteckigen Zonen und die Flächenabmessungen,
l) Einrichtungen, die dafür ausgelegt sind, auf an sich bekannte Weise die Bezugsleuchtdichte genannte Leuchtdichte des Pixels oder der Pixelgruppe dieses Bereichs des digitalisierten Trägerbilds, das bzw. die als normal beleuchtet betrachtet wird, und die der anderen Pixel oder Pixelgruppen dieses Bereichs zu berechnen und die Differenzen zu der Bezugsleuchtdichte zu berechnen,
so daß
die Wirkung der Perspektive und der Proportionen durch Auswertung des Verhältnisses zwischen den Musterabmessungen und den Flächenabmessungen beibehalten wird und
die ggf. bestehenden Beleuchtungsänderungen ebenfalls dadurch beibehalten werden, daß an den RGB-Werten der einzelnen Pixel oder Pixelgruppen der ausgewählten Wiederholungsfläche eine zu den berechneten Leuchtdichtedifferenzen proportionale Korrektur vorgenommen wird.

## Claims

1. Method of displaying, on a video screen, the result of the simulated application of a decoration, on at least one monochrome plane of the digitized image, called a support image, of a three-dimensional object or set of three-dimensional objects, called a three-dimensional support, which consists:
a - in constructing a collection of digitized images of decorations and in recording the said digitized images in a pattern file,
b - in delimiting, on the screen, by means of a polygonal surround, at least one region of the said support image, thus obtaining a mask,
c - in recording, in a support image file, the digitized image of the said support image or the said support images and the mask or the said masks,
d - in selecting a decoration from the pattern file and a mask from the support image file, and
e - in displaying the application of the said decoration on the said support image,
characterized in that, in order to make the said method applicable to decorations providing repetition of a defined pattern, which decorations are called repetitive surfaces, while at the same time meeting the effect of perspective and of proportions and the possible variations in lighting, the said method furthermore consists:
f - in delimiting, by means of a rectangular surround (Ym, Xm), in each of the said digitized repetitive-surface images, a unitary pattern; in measuring *in situ* the actual length and width of the said pattern dimensions of this unitary pattern and in assigning these pattern dimensions to the said rectangular surround,
g - in furthermore recording, in the said pattern file:
the said unitary pattern of each repetitive surface and the said pattern dimensions,
h - in delimiting *in situ*, over at least one plane of the said three-dimensional support, called a reference plane, a rectangular area whose length and width, called the plane dimensions, are measured,
i - in delimiting on the screen, in this same reference plane of the support-forming digitized image, the projection (A, B, C, D and A' B' C' D') of the said rectangular area,
j - in carrying out step b- by creating the said mask in at least one region of the said reference plane,
k - in furthermore recording, in the said support image file:
the projection or the said projections of rectangular areas and the said plane dimensions,
l - in computing, in a manner known per se, the luminance of the pixel, or group of pixels, of the said region of the digitized support image which is considered normally lit, called the reference luminance, and that of the other pixels, or groups of pixels, of this region and in computing the differences from the reference luminance,
by virtue of which, after carrying out the aforementioned steps d- and e-
the effect of perspective and proportions is met by using the ratio between the pattern dimensions and the plane dimensions, and
the possible lighting variations are, likewise, met by applying, to the RGB values of the various pixels or groups of pixels of the selected repetitive surface, a correction proportional to the previously calculated differences in luminance.

2. Method according to Claim 1, characterized in that it uses, as a collection of repetitive surfaces, a collection coming from samples or from photographs of decorative substrates chosen from floor tiling, wall tiling, wallpapers, parquet flooring, floor slabs, patterned carpets, screen walls and other similar products.

3. Method according to Claim 1 or 2, characterized in that it uses a collection of support images coming from photographs, or of shaded drawings, of furniture elements in a particular situation, such as kitchens, bathrooms, etc.

4. Method according to any one of Claims 1 to 3, characterized in that it furthermore uses a collection of the self-coloured surfaces.

5. Method according to any one of Claims 1 to 3, characterized in that it uses, as the support image, a photograph, or a shaded drawing, of a personalized fitting-out plan.

6. Application of the method according to any one of Claims 1 to 4 to the production of an interactive video catalogue.

7. Interactive video catalogue coming from the implementation of the method according to any one of Claims 1 to 4 for displaying, on a video screen, the result of the simulated application of a decoration, on at least one monochrome plane of the digitized image, called a support image, of a three-dimensional object or set of three-dimensional objects, called a three-dimensional support, comprising:
a - means suitable for constructing a collection of digitized images of decorations and for recording the said digitized images in a pattern file,
b - means suitable for delimiting, on the screen, by means of a polygonal surround, at least one region of the said support image, thus obtaining a mask,
c - means suitable for recording, in a support image file, the digitized image of the said support image or the said support images and the mask or the said masks,
d - means suitable for selecting a decoration from the pattern file and a mask from the support image file, and
e - means suitable for displaying the application of the said decoration on the said support image,
characterized in that, in order to make the said method applicable to decorations providing repetition of a defined pattern, which decorations are called repetitive surfaces, while at the same time meeting the effect of perspective and of proportions and the possible variations in lighting, the said interactive video catalogue furthermore comprises:
f - means suitable for delimiting, by means of a rectangular surround (Ym, Xm), in each of the said digitized repetitive-surface images, a unitary pattern; for measuring *in situ* the actual length and width of the said pattern dimensions of this unitary pattern and for assigning these pattern dimensions to the said rectangular surround,
g - means suitable for furthermore recording, in the said pattern file:
the said unitary pattern of each repetitive surface and the said pattern dimensions,
h - means suitable for delimiting *in situ*, over at least one plane of the said three-dimensional support, called a reference plane, a rectangular area whose length and width, called the plane dimensions, are measured,
i - means suitable for delimiting on the screen, in this same reference plane of the support-forming digitized image, the projection (A, B, C, D and A' B' C' D') of the said rectangular area,
j - means suitable for creating the said mask in at least one region of the said reference plane,
k - means suitable for furthermore recording, in the said support image file:
the projection or the said projections of rectangular areas and the said plane dimensions,
l - means suitable for computing, in a manner known per se, the luminance of the pixel, or group of pixels, of the said region of the digitized support image which is considered normally lit, called the reference luminance, and that of the other pixels, or groups of pixels, of this region and for computing the differences from the reference luminance,
by virtue of which
the effect of perspective and proportions is met by using the ratio between the pattern dimensions and the plane dimensions, and
the possible lighting variations are, likewise, met by applying, to the RGB values of the various pixels or groups of pixels of the selected repetitive surface, a correction proportional to the previously calculated differences in luminance.
